Europäisches Patentamt

European Patent Office

Office européen des brevets

(11) Veröffentlichungsnummer: **0 260 329 B1**

## EUROPÄISCHE PATENTSCHRIFT

(45) Veröffentlichungstag der Patentschrift: **29.07.92**

(21) Anmeldenummer: **86112686.0**

(22) Anmeldetag: **13.09.86**

(51) Int. Cl.⁵: **H04N 9/64**

(54) **Adapterschaltung für Fernsehkomponentensignale.**

(43) Veröffentlichungstag der Anmeldung:
**23.03.88 Patentblatt 88/12**

(45) Bekanntmachung des Hinweises auf die
Patenterteilung:
**29.07.92 Patentblatt 92/31**

(84) Benannte Vertragsstaaten:
**DE FR NL**

(56) Entgegenhaltungen:
**EP-A- 0 046 108**
**DE-B- 2 744 004**

**FEINWERKTECHNIK & MESSTECHNIK, Band
93, Nr. 3, April 1985, Seiten 113-116, München, DE; J.DEUTRICH: "Technik hochwertiger Sichtgeräte (Displays)**

(73) Patentinhaber: **Deutsche ITT Industries GmbH
Hans-Bunte-Strasse 19 Postfach 840
W-7800 Freiburg i.Br.(DE)**

(72) Erfinder: **Freyberger, Laurin Clemens,
Dipl.-Ing.
Schönenbergstrasse 1
W-7833 Endingen a.K.(DE)**
Erfinder: **Lang, Manfred
Breitenfeldstrasse 27
W-7832 Kenzingen(DE)**
Erfinder: **Deubert, Rolf, Dipl.-Ing.
Speckbacherweg 5
W-7800 Freiburg i.Br.(DE)**

**Beschreibung**

Die Erfindung betrifft eine Adapterschaltung für die Übertragung von Fernsehkomponentensignalen zwischen Geräten, die mittels einer Euro-Norm-AnschlußbuchsenSteckverbindung (=SCART-Buchse) untereinander verbunden sind, vgl. hierzu deutsches Normblatt DIN EN 50049 vom Dezember 1985, (Peritelevision-Verbindung). Zwecks besserer Farbwiedergabe werden dabei die R-, G- und B-Signale (R = Rot, G = Grün, B = Blau) getrennt zugeführt, aber es besteht auch die Möglichkeit, das entsprechende Kompositsignal, nämlich das externe Videosignal, zuzuführen. Mit diesem Signal werden im Regelfall die Zeilen- und Bildsynchronimpulse übertragen. Mittels eines ebenfalls zugeführten Videoumschaltsignals kann entweder das externe Videosignal oder ein im betreffenden Gerät, z.B. im Empfangsteil eines Fernsehempfängers, selbst erzeugtes internes Videosignal der weiteren Verarbeitung zugeführt werden. Ebenso wird in getrennter Form das Rechts- bzw. das Links-Tonsignal angeschlossen. Die Steuerung dieser verschiedenen Signale und deren Umwandlung in Signale, die in vorhandenen Schaltungen des Gerätes verarbeitet werden können, erfolgt in der Adapterschaltung.

Eine Adapterschaltung für Fernsehkomponentensignale mit einem externen Videosignal und zugehörigen Tonsignalen, ist in der Offenlegungsschrift DE-A-34 24 931 beschrieben. Die Adapterschaltung verbindet elektronisch funktionsrichtig eine SCART-Buchse und eine DIN-Buchse miteinander.

Die Aufgabe der in den Ansprüchen gekennzeichneten Erfindung besteht indessen darin, eine Adapterschaltung anzugeben, die die Fernsehkomponentensignale mindestens einer SCART-Buchse an die vorhandenen Bausteine eines digitale Fernsehsignale verarbeitenden Geräts anpaßt. Da diese Verarbeitung anhand der beiden Farbart-Differenz-Signale (= (R-Y)-Signal, (B-Y)-Signal) erfolgt, sind in der Adapterschaltung die eingehenden R-, G- und B-Signale in die beiden Farbart-Differenz-Signale und in das Helligkeits-Signal (= Y-Signal) umzuwandeln.

Ein Vorteil der Erfindung besteht darin, daß das Y-, das (R-Y)- und das (B-Y)-Signal an einer Eingangs-Ausgangs-Schnittstelle herausgeschleift ist. Durch zuschaltbare analoge Filter können diese Signale beeinflußt, z.B. in der Bandbreite beschnitten, werden, oder es können der Adapterschaltung die an einer anderen Stelle im Gerät erzeugten Signale über die Eingangs-Ausgangs-Schnittstelle zugeführt werden.

Es ist ferner von Vorteil, daß die Adapterschaltung monolithisch integrierbar und damit für den Konsumgerätebereich verwendbar ist.

Bei einem Ausführungsbeispiel der Erfindung besteht ein weiterer Vorteil darin, daß zur Digitalisierung des Y-Signals ein bereits im Gerät vorhandener Video-Analog-Digital-Wandler verwendet wird, dessen Bandbreite größer als die erforderliche Bandbreite für die Digitalisierung der Farbart-Differenz-Signale ist.

Die Erfindung wird nun anhand der Figuren der Zeichnung näher erläutert.

Fig. 1 zeigt in Form eines schematischen Blockschaltbilds ein Ausführungsbeispiel der Adapterschaltung,

Fig. 2 und 3 zeigen die schematische Pegelanpassung des zu digitalisierenden Signals an die Wandlerkennlinie,

Fig. 4 zeigt als Blockschaltbild schematisch ein Ausführungsbeispiel einer Klemmschaltung und einer Gleichpegeleinstellschaltung, und

Fig. 5 zeigt ein einfaches Ausführungsbeispiel einer Gleichpegeleinstellschaltung.

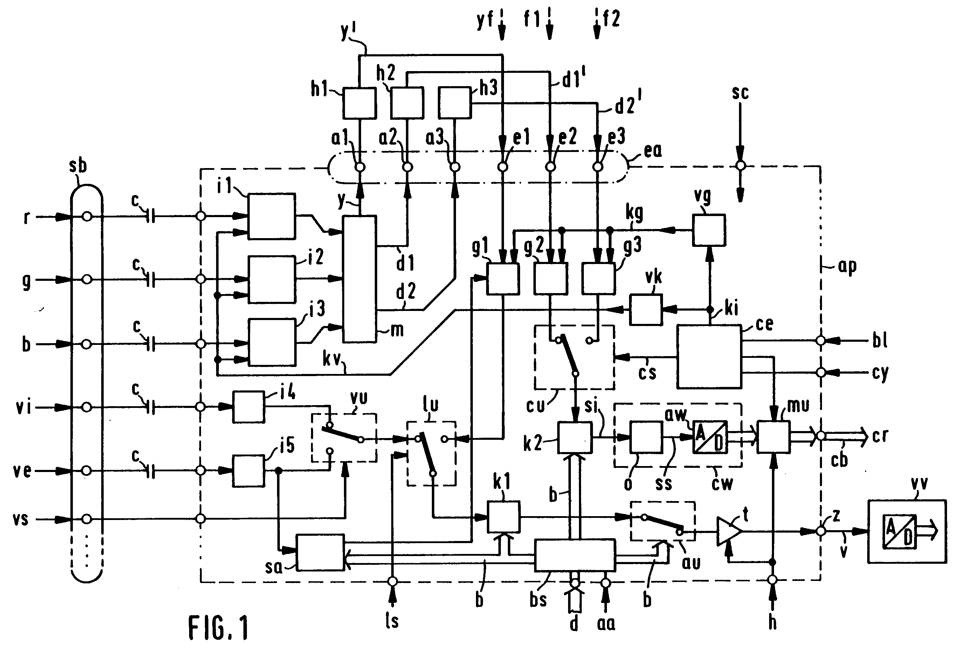

In Fig. 1 sind der SCART-Buche sb als Eingangssignale für die gestrichelt umrahmte Adapterschaltung ap das R-, G-, das B-, das interne Video-, das externe Video- und das Videoumschaltsignal, also die Signale r, g, b, vi, ve, vs zugeführt. Bis auf das Videoumschaltsignal vs ist jedem dieser beschriebenen Signale jeweils eine der Eingangsschaltungen i1...i5 zugeordnet, und zwar speisen in der angegebenen Reihenfolge die zugeführten Signale jeweils die erste bzw. die zweite bzw. die dritte bzw. die vierte bzw. die fünfte Eingangsschaltung i1, i2, i3, i4, i5 der Adapterschaltung ap.

Der ersten bis fünften Eingangsschaltung ist jeweils ein Koppelkondensator c vorgeschaltet. Die erste, die zweite und die dritte Eingangsschaltung i1, i2, i3 enthalten dabei Klemmschaltungen, die während eines durch den Key-Impuls ki gesteuerten Klemmintervalls die Klemmspannung kv niederohmig an die jeweilige Eingangsklemme der Eingangsschaltungen i1, i2, i3 legt und damit den adapterschaltungsseitigen Belag des jeweiligen Koppelkondensators c auf diese Klemmspannung kv klemmt. Dieser Klemmvorgang wiederholt sich periodisch zu Anfang jeder Bildzeile während des hinteren Schwarzschulterintervalls. Wahrend dieser Zeit wird bekanntlich als Signal-Gleichbezugspegel der Schwarzbezugspegel übertragen. Die Klemmspannung kv wird so eingestellt, daß das Eingangssignal etwa in der Mitte des Aussteuerbereichs der Eingangsschaltung liegt.

Der Key-Impuls ki ist durch den Schaltsignalerzeuger ce mittels des von außen zugeführten Sandcastle-Impulses b1 erzeugt und schaltet die vom Klemmspannungserzeuger vk gebildete Klemmspannung kv auf die drei Eingangsschaltungen i1, i2, i3 durch. Der Schaltsignalerzeuger ce bildet z.B. mittels bekannter Abtrennschaltungen aus dem zugeführten Sandcastle-Impuls b1 den Key-Impuls ki mit normgemäßer Lage und Dauer. Das mit Sandcastle-Impuls bezeichnete Signal stellt bekanntlich ein Gemisch von Impulsen unterschiedlicher Amplituden dar, das mit der höchsten Amplitude, aber mit der kürzesten Impulsdauer den Farbsynchronsignal-Austastimpuls, nämlich den Key-Impuls ki, mit einem niedrigeren Pegel den breiteren Zeilenaustastimpuls und eventuell mit einem noch niedrigeren Pegel den sich über mehrere Zeilen erstreckenden Bildaustastimpuls enthält.

Bei der vierten und fünften Eingangsschaltung i4, i5 handelt es sich ebenfalls um Klemmschaltungen, die hier aber von einfacherer Art sind, indem nur auf den Extremwert, also auf das Synchronimpulsdach, geklemmt wird. Das Ausgangssignal der vierten Eingangsschaltung i4 ist dem ersten Eingang und das Ausgangssignal der fünften Eingangsschaltung i5 ist dem zweiten Eingang des Videoumschalters vu zugeführt. Dessen Ausgang speist den ersten Eingang des Luma-Umschalters lu, der vom Luma-Umschaltsignal ls gesteuert ist. Dieses Signal ist der Adapterschaltung von einer Steuerschaltung des Gerätes zugeführt. Der Steuereingang des Videoumschalters vu ist mit dem Video-Umschaltsignal vs aus der SCART-Buchse gespeist.

Die Ausgangssignale der ersten, der zweiten und der dritten Eingangsschaltung i1, i2, i3 sind der Matrix m zugeführt, die aus dem R-, dem G-, und dem B-Signal das Y-Signal y und das erste und zweite Farbart-Differenz-Signal d1, d2 erzeugt. Diese Signale sind jeweils einem Ausgangsanschluß a1, a2, a3 der Eingangs-Ausgangs-Schnittstelle ea zugeführt. Jedem dieser drei Ausgangsanschlüsse a1, a2, a3 ist ein entsprechender Eingangsanschluß der Eingangs-Ausgangs-Schnittstelle ea zugeordnet, dem entweder direkt das entsprechende Ausgangssignal y, d1, d2 der Matrix m oder das entsprechende gefilterte Ausgangssignal y', d1', d2' oder ein entsprechendes weiteres, an anderer Stelle erzeugtes Signal yf, f1, f2 zugeführt ist. Mit der Filterung der Signale an den Ausgangsanschlüssen a1, a2, a3 kann z.B. die Bandbreite der Signale eingeengt werden, was z.B. beim Videorecorderbetrieb von Vorteil ist.

Den drei Eingangsanschlüssen e1, e2, e3 ist jeweils eine Schnittstellen-Eingangsschaltung g1, g2, g3 zugeordnet, die ebenfalls wie die erste, zweite und dritte Eingangsschaltung i1, i2, i3 jeweils als Klemmschaltung ausgeführt ist. Dies ermöglicht eine gleichspannungsfreie Ausführung der drei Filter h1, h2, h3 der Eingangs-Ausgangs-Schnittstelle ea oder die kapazitive Ankopplung des weiteren Luminanzsignals yf und/oder des weiteren ersten und zweiten Farbart-Differenz-Signals f1, f2. Die zeitliche Lage und Dauer der Schnittstellen-Klemmspannung kg wird ebenfalls vom Key-Impuls ki gesteuert, die beiden Klemmspannungen kv, kg können indessen unterschiedlich hoch sein. Sie werden entweder im Klemmspannungserzeuger vk oder im Schnittstellen-Klemmspannungserzeuger vg erzeugt, wobei diesen beiden Teilschaltungen als zeitliches Steuersignal der Key-Impuls ki zugeführt ist.

Für den Fall , daß die Horizontal- und Vertikal-Synchronsignale nur mit dem externen Video-Signal ve übertragen werden, sind diese dem Ausgangssignal der ersten Schnittstellen-Eingangsschaltung g1 hinzuzufügen. Zu diesem Zweck speist dann das Ausgangssignal der fünften Eingangsschaltung i5 die Synchronimpuls-Abtrennschaltung sa, die aus dem externen Videosignal ve das Horizontal- und Vertikal-Synchronsignal abtrennt und der ersten Schnittstellen-Eingangsschaltung g1 zuführt. Das Zu- oder das Abschalten dieser Abtrennschaltung erfolgt durch Steuerung mittels des Datenbus b, der mit einer Datenquelle als Steuereinrichtung außerhalb der Adapterschaltung ap verbunden ist. Die Datenquelle liefert die Daten d als Adressen und Befehle.

Der Ausgang des Luma-Umschalters lu ist mit dem Eingang des ersten Amplitudenstellers k1 verbunden, dessen Steuereingang am Datenbus b und dessen Ausgangssignal am Eingang des Auswahlschalters au liegt. Dessen Ausgang ist über die Treiberstufe t an die Ausgangsbuchse z der Adapterschaltung ap geführt. Das Ausgangssignal der Ausgangsbuchse z ist das Ausgangs-Videosignal v, das entweder über die Matrix m das Helligkeitssignal aus der ersten Schnittstellen-Eingangsschaltung g1 oder aber auch das kombinierte Farb-Bild-Austast-Synchron-Signalgemisch ( = FBAS-Signal) sein kann, das als internes oder externes Videosignal vi, ve der SCART-Buchse sb zugeführt ist. Das Ausgangs-Videosignal v kann nun dem Eingang einer im Gerät bereits vorhandenen Videosignal-Digitalisierungs- und -Verarbeitungs-Stufe vv zugeführt werden, die das Ausgangs-Videosignal v digitalisiert und zusammen mit dem Chroma-Signal cr aus der Adapterschaltung ap weiterverarbeitet.

Da die Bandbreite der beiden Farbart-Differenzsignale nach der zweiten und dritten Schnittstellen-Eingangsschaltung g2, g3 kleiner als die Bandbreite des Y-Signals ist, findet die Digitalisierung dieser beiden Farbart-Differenz-Signale abwechselnd in einem einzigen Chroma-Wandler cw statt. Die beiden Ausgänge der zweiten und dritten Schnittstellen-Eingangsschaltung g2, g3 sind jeweils einem Eingang des Chroma-Umschalters cu zugeführt, dessen Ausgangssignal über den zweiten Amplitudensteller k2 geführt ist. Dessen Steuereingang ist mit dem Datenbus b verbunden, und der eingestellte Wert ist identisch mit dem des ersten Amplitudenstellers k1, welche Werte somit jeweils parallel gleichartig gesteuert sind.

Das Steuersignal für den Chroma-Umschalter cu ist das Chroma-Schaltsignal cs, das der Schaltsignalerzeuger ce aus dem der Adapterschaltung ap zugeführten Chroma-Multiplex-Synchronsignals cy und dem Systemtakt sc erzeugt. Beträgt die Bandbreite der Farbart-Differenz-Signale z.B. 1 MHz, dann ist es völlig ausreichend, jedes Farbart-Differenzsignal mit einer Frequenz von 4 MHz zu digitalisieren. Ist dagegen die Bandbreite der Farbart-Differenz-Signale vergleichbar mit der Bandbreite des normgemäßen Helligkeits-Signals von 5 MHz, dann müssen die beiden Farbart-Differenzsignale getrennt mit der gleichen Frequenz wie das Helligkeitssignal digitalisiert werden. Der Systemtakt sc ist im Gerät zugleich die Abtastfrequenz, mit der in der Videosignal-Digitalisierungs- und - Verarbeitungsstufe vv das zugeführte Signal digitalisiert ist. Die Frequenz des Systemtakts sc ist dabei wegen des Abtasttheorems mindestens doppelt so groß wie die maximale zugeführte Signalfrequenz.

Das Ausgangssignal des zweiten Amplitudenstellers k2 speist im Chroma-Wandler cw die Anpaßstufe o, die der Anpassung des Bezugspegels an den speziellen Gleichpegel des Analog-Digital-Wandlers aw dient. Die Anpaßstufe o ist ferner Treiberschaltung, indem sie niederohmig das zu digitalisierende Signal ss an den Analog-Digital-Wandler aw anschließt. Wenn die Ausgangssignale der zweiten und dritten Schnittstellen-Eingangsschaltung g2, g3 gegenphasige Differenzsignale (z.B. Ausgangsignale eines Differenzverstärkers) sind, liegt der Anpaßpegel des Analog-Digitalwandlers aw genau in der Mitte seines Aussteuerbereiches.

Die parallelen Ausgangsdaten des Chroma-Wandlers cw sind dem Multiplexer mu zugeführt, der von dem Schaltsignalerzeuger ce gesteuert die parallelen Ausgangsdaten des Chroma-Wandlers cw mindestens teilweise in serielle Daten als Chroma-Signal cr umwandelt und an einen im Gerät vorhandenen Chroma-Bus cb anschließt. Die Signalumwandlung durch den Multiplexer mu erlaubt, daß die erforderliche Anzahl von Chroma-Busleitungen gegenüber der Ausgangsstellenzahl des Chroma-Wandlers cw reduziert ist.

Ein Ausführungsbeispiel für den Chroma-Bus cb mit zugehörigem zeitlichen Verlauf der Chroma-Signale cr und der zugehörigen Steuer- bzw. Synchron-Signale, z.B. dem Chroma-Multiplex-Synchronsignal cy, ist in der Firmendruckschrift INTERMETALL Semiconductors ITT, "Digit 2000 VLSI Digital TV System", Ausgabe 1985/6, Seiten 62 bis 65 beschrieben.

Der Bussteuerung bs für den Datenbus b ist außer den Daten d wahlweise ein Adressen-Modifikationssignal aa zugeführt. Damit wird der Anschluß mindestens zweier Adapterschaltungen ap in ein und demselben Gerät ermöglicht. Mittels des Modifikationssignals aa kann dann die Datenbusadresse und damit die Adresse der zugehörigen Adapterschaltung verändert werden, so daß von der äußeren Datenquelle jeweils eine der Adapterschaltungen gezielt adressiert und damit angesprochen werden kann. Das zugeführte Sperrsignal h sperrt dabei die anderen nichtadressierten Adapterschaltungen, indem die Ausgänge für das Chroma-Signal cr und das Ausgangs-Videosignal v hochohmig gemacht werden. Das Sperrsignal h ist im Ausführungsbeispiel daher dem Multiplexer mu und der Treiberschaltung t zugeführt.

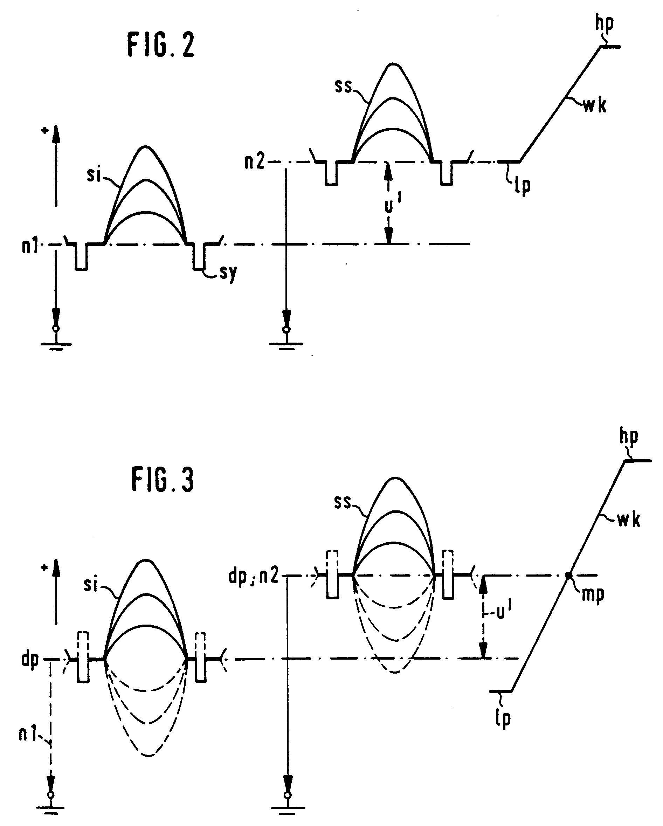

Fig. 2 zeigt ein Beispiel für die Gleichpegelanpassung eines unipolaren Eingangssignales an den Aussteuerbereich der Wandlerkennlinie wk, deren Grenze durch den unteren Pegel lp und den oberen Pegel hp festgelegt ist. Das Eingangssignal si ist z.B. ein FBAS-Signal, bei dem der Synchronimpuls sy negativ gerichtet ist. Der Bezugspegel des FBAS-Signals ist bekanntlich der Schwarzpegel, der während eines Teils der Zeilenaustastzeit als konstantes Potential übertragen wird. Durch die Klemmschaltung wird dieser Bezugspegel auf das Gleichbezugspotential n1 geklemmt.

Der Aussteuerbereich der Wandlerkennlinie wk liegt in diesem Beispiel gegenüber dem Eingangssignal ei in einem anderen Pegelbereich. Sollen die Synchronimpulse sy nicht digitalisiert werden, so ist es vorteilhaft, wenn der Bezugspegel des zu digitalisierenden Signals ss auf den unteren Pegel lp der Wandlerkennlinie gelegt wird, weil damit der Aussteuerbereich der Wandlerkennlinie wk optimal ausgenutzt ist. Die notwendige Pegelverschiebung vom Gleichbezugspegel n1 auf den Gleichbezugspegel n2 beträgt dabei u'. Die Festlegung des ersten Gleichbezugspegels n1 hängt vom jeweiligen Aussteuerbereich der Klemmschaltung ab und davon, ob das Eingangssignal si begrenzt oder nicht begrenzt werden soll.

Fig. 3 zeigt die Pegelverschiebung durch die Gleichpegeleinstellschaltung, wenn es sich bei dem Eingangssignal si um ein gegenphasiges Differenzsignal handelt, das wie in Fig. 2 ein FBAS-Signal darstellt. Der Differenz-Bezugspegel dp des Eingangssignals si ist auch hier die Schwarzschulter. Durch die vorangehende Klemmung wird er auf den ersten Gleichbezugspegel n1 geklemmt. Dieser Pegel spielt indessen für die Gleichpegeleinstellung in der Anpaßschaltung o keine Rolle, weil der Gleichpegel bei Differenzsignalen bekanntlich unterdrückt wird.

Die optimale Einstellung des zweiten Gleichbezugspegels n2 des zu digitalisierenden Signals ss erfolgt auf den mittleren Pegel mp der Wandlerkennlinie wk, auf den der Differenz-Bezugspegel dp eingestellt wird. Damit liegt ein symmetrischer Aussteuerbereich auf der Wandlerkennlinie wk zwischen dem unteren und dem oberen Pegel lp, hp fest.

Der Differenz-Bezugspegel dp ist dadurch definiert, daß die Eingangs- oder die Ausgangssignale einer Differenzsignalverarbeitungsanordnung jeweils auf gleichem Potential liegen. Das jeweilige Potential zum Massebezugspunkt ist dabei ohne Bedeutung, wenn der jeweilige Arbeitsbereich nicht überschritten wird. In Fig. 3 ist daher auch die Gleichpegeldifferenz u' zwischen dem Eingangs- und Ausgangssignal si, ss der Anpaßstufe o nur gestrichelt angedeutet.

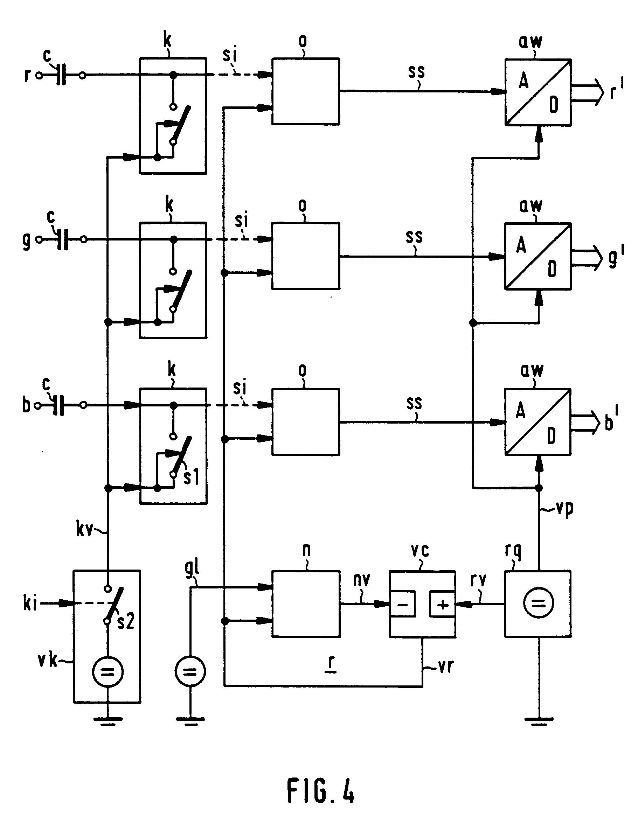

Fig. 4 zeigt als Blockschaltbild eine schematische Anordnung der Gleichpegeleinstellschaltung zusammen mit der Eingangsklemmschaltung. Zur Verdeutlichung ist die Gleichpegeleinstellschaltung direkt mit dem Ausgangssignal der Klemmschaltung k gespeist, obgleich z.B. in einem praktischen Ausführungsbeispiel Signalaverarbeitungsschaltungen zwischen der Klemmschaltung k und der Gleichpegeleinstellschaltung eingefügt sein können, die zusätzlich noch einen festen Potentialversatz beisteuern. Ferner werden zur Vereinfachung, anders als in Fig. 1, direkt die zugeführten Fernsehkomponentensignale r, g, b in jeweils einem zugehörigen Analog-Digitalwandler aw digitalisiert und ergeben somit die digitalisierten Fernsehkomponentensignale r', g', b'.

Da die Signalverarbeitungswege für die Digitalisierung der drei Fernsehkomponentensignale r, g, b einander gleich sind, wird für die Beschreibung nur der Signalweg des B-Signals b herangezogen. Dieses ist als Eingangssignal dem Koppelkondensator c zugeführt, dessen anderer Belag an den Signaleingang der Klemmschaltung k angeschlossen ist. Der Signaleingang und der Signalausgang der Klemmschaltung k sind durchverbunden, und diese Verbindung enthält einen Abgriff, der an den Ausgang eines ersten elektronischen Schalters s1 innerhalb der Klemmschaltung k angeschlossen ist. Dieser Schalter schließt sich, wenn am Steuereingang der Klemmschaltung k die Klemmspannung kv während des Klemmintervalls anliegt. Zugleich wird über den ersten Schalter s1 die Klemmspannung kv an die durchverbundene Signalleitung innerhalb der Klemmschaltung k gelegt. Damit ist der adapterseitige Belag des Koppelkondensators c auf das Potential der Klemmspannung kv gelegt.

Die Erzeugung der Klemmspannung kv erfolgt im Klemmspannungserzeuger vk, der eine Spannungsquelle vom Potential der Klemmspannung kv enthält, die mittels des zweiten elektronischen Schalters s2 auf den Ausgang des Klemmspannungserzeugers vk geschaltet ist. Der zweite elektronische Schalter s2 wird während des Klemmintervalls durch den Key-Impuls ki geschlossen.

Das Ausgangssignal der Klemmschaltung k ist in Fig. 4 das Eingangssignal si der Gleichpegeleinstellschaltung und speist den Signaleingang der Anpaßstufe o. Das dazu im Pegel verschobene Ausgangssignal ist das zu digitalisierende Signal ss, das dem Analog-Digital-Wandler aw zugeführt ist.

Der Spannungsregelkreis r zur Erzeugung der Steuerspannung für die Anpaßstufe o enthält die elektronisch und auch auslegemäßig möglichst genaue Nachbildung n der Anpaßstufe o, den Spannunsvergleicher vc und die Referenzspannungsquelle rq. Die Anpaßstufe o und die Nachbildung n sind beide mit einem Signaleingang und einem Steuereingang versehen. Am Signaleingang der Nachbildung n liegt die Gleichspannung gl einer Hilfsspannungsquelle, deren Gleichpotential etwa dem mittleren Gleichpegel des Eingangssignals si gleich ist. Die Referenzspannungsquelle rq erzeugt die Referenzspannung rv, die dem Minuend-Eingang des Spannungsvergleichers vc zugeführt ist. Ferner erzeugt die Referenzspannungsquelle rq die zur Referenzspannung rv proportionale Spannung vp, die dem Spannungsreferenzeingang des Analog-Digital-Wandlers aw zugeführt ist.

Das Ausgangssignal des Spannungsvergleichers vc ist die Differenz zwischen der Referenzspannung rv und der Nachbildungsspannung nv und ist als Regelsignal vr zugleich dem Steuereingang der Nachbildung n und der Anpaßstufe o zugeführt. Damit ist für den Bezugspegel - nämlich den Gleichbezugspegel n2 - des zu digitalisierenden Ausgangssignals ss Spannungsgleichheit mit der Referenzspannung rv hergestellt.

Im Falle des gegenphasigen Eingangssignales si nach Fig. 3 ist die Referenzspannung rv bzw. der Gleichbezugspegel n2 identisch mit dem mittleren Pegel mp der Wandlerkennlinie wk. Wäre dabei der untere Pegel lp identisch mit dem Massepotential, dann wäre die proportionale Spannung vp doppelt so groß wie die Referenzspannung rv.

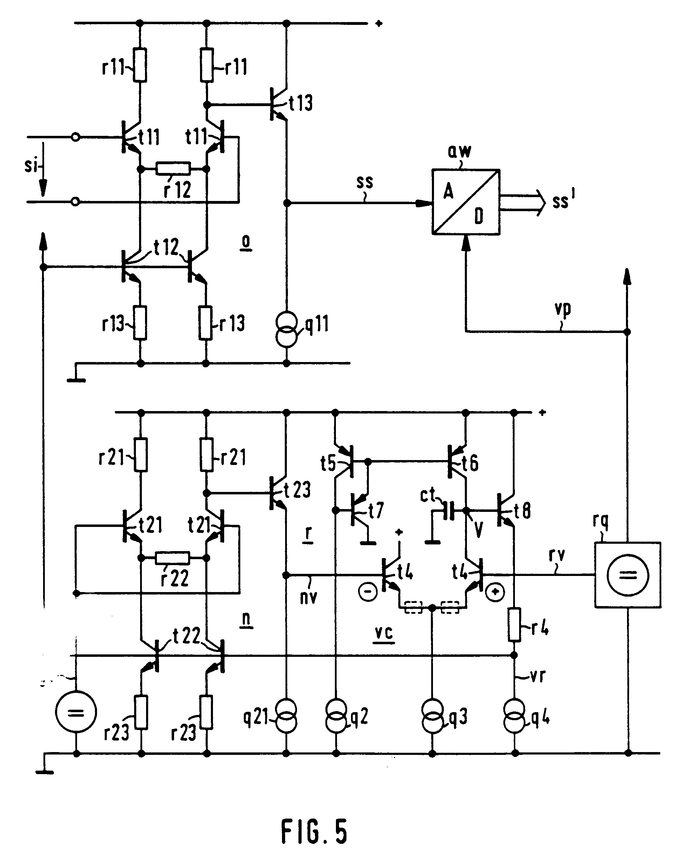

In Fig. 5 ist ein einfaches Ausführungsbeispiel einer monolithisch integrierten Gleichpegeleinstellschaltung gezeigt. Die Schaltung ist für gegenphasige Eingangssignale si bestimmt und enthält daher als Anpaßstufe o bzw. als Nachbildung n in gleicher Ausführung und gleicher Bemessung der entsprechenden Einzelelemente je eine Differenzverstärkerstufe mit dem ersten bzw. zweiten Transistorpaar t11, t21, und dem dritten bzw. vierten Transistorpaar t12, t22 als Stromquelle in den zugehörigen Emitterzuleitungen. Die jeweilige Auskopplung mittels des ersten bzw. zweiten Emitterfolgers t13, t23 erfolgt unsymmetrisch an einen Widerstand des ersten bzw. zweiten Widerstandpaars r11, r21 im Kollektorzweig der jeweiligen Differenzverstärkerstufe. In dem ersten bzw. zweiten Transistorpaar t11, t21 sind die Emitter jeweils durch den ersten bzw. zweiten Gegenkopplungswiderstand r12, r22 miteinander verbunden. Den Basen des ersten Transistorpaars t11 ist das Differenz-Eingangssignal si zugeführt, das sowohl unipolar als auch bipolar sein kann. Der Differenz-Bezugspegel dp ist durch das Eingangssignal si gleich 0 Volt festgelegt.

Der Ausgang der Anpaßstufe o bzw. der Nachbildung n, nämlich der erste bzw. der zweite Emitterfolger t13, t23 ist über die erste bzw. zweite Stromquelle q11, q21 mit dem Masseanschluß verbunden. Das Ausgangssignal des ersten Emitterfolgers t13 ist als das zu digitalisierende Signal ss dem Eingang des Analog-Digital-Wandlers aw zugeführt. Dessen Ausgangssignal ist das digitalisierte Signal ss'.

Der Ausgangsgleichpegel der Anpaßstufe o ist vom Kollektorstrom abhängig, der durch das erste Widerstandspaar r11 fließt. Dieser Strom ist vom Basispotential des dritten Transistorpaars t12 und dem zugehörigen Emitterwiderstand r13 abhängig. Eine Vergrößerung des Basispotentials erhöht den gemeinsamen Strom in dem ersten Widerstandspaar r11 und senkt daher das Ausgangspotential am ersten Emitterfolger t13 ab. Die Steuerung des Basispotentials, das identisch mit dem Regelsignal vr ist, erfolgt durch den Spannungsregelkreis r. Entsprechend dem Differenz-Bezugspegel 0 Volt liegen die beiden Basen des zweiten Transistorpaares t21 der Nachbildung n an einer Gleichspannung gl, die ungefähr dem an dem ersten Transistorpaar t11 liegenden mittleren Gleichpegel des Eingangssignals si gleich ist. Das dem Differenzbezugspegel dp von 0 Volt entsprechende Ausgangssignal ist die Nachbildungsspannung nv, die dem Subtrahend-Eingang des Spannungsvergleichers vc zugeführt ist, dessen Minuend-Eingang mit der Referenzspannung rv gespeist ist. Die beiden Eingänge des Spannungsvergleichers vc sind durch die Basen des fünften Transistorpaars t4 gebildet, wobei der Kollektor des subtrahendseitigen Transistors mit der positiven Versorgungsspannung und der Kollektor des minuendseitigen Transistors mit dem Ausgang einer durch die drei Transistoren t5, t6, t7 gebildeten Stromspiegelschaltung verbunden ist, die von der dritten Stromquelle q2 gespeist ist. Die beiden Emitter des fünften Transistorpaares t4 sind direkt oder über gegenkoppelnde Widerstände miteinander verbunden und liegen gemeinsam über die vierte Stromquelle q3 an der Masseleitung. Der Ausgangsstrom der Stromspiegelschaltung t5, t6, t7 ist vorteilhafter Weise so groß, wie der Kollektorstrom des minuendseitigen Transistors im Gleichgewichtszustand des Spannungsvergleichers vc, d.h. bei Spannungsgleichheit zwischen der Nachbildungsspannung nv und der Referenzspannung rv.

Der Verbindungspunkt V zwischen dem Ausgangskollektor der Stromspiegelschaltung t5, t6, t7 und dem minuendseitigen Kollektor des fünften Transistorpaares t4 ist durch die Gegeneinanderschaltung der beiden Kollektoren sehr hochohmig. Dadurch spricht dieser Verbindungspunkt V sehr empfindlich auf Änderungen der Differenzspannung an den beiden Eingängen des Spannungsvergleichers vc an und eignet sich daher als Auskopplungspunkt für einen Emitterfolger, indem die Basis des achten Transistors t8 daran angeschlossen ist. Der Emitter des achten Transistors t8 ist über den die Reihenschaltung von viertem Widerstand r4 und fünfter Stromquelle q4 an Masse angeschlossen. Der vierte Widerstand r4 dient einem konstanten Pegelversatz zwischen dem Emitter des achten Transistors t8 und den Basen der zu steuernden dritten und vierten Transistorpaare t12, t22. Dieses Regelsignal vr ist dem vierten Transistorpaar t22 der Nachbildung n, dem dritten Transistorpaar t12 der Anpaßstufe o und weiteren in der Fig. 5 nicht gezeichneten Anpaßstufen zugeführt.

Zur Verhinderung von Eigenschwingungen des Spannungsregelkreises r ist vom Verbindungspunkt V der mitintegrierbare Dämpfungskondensator ct nach Masse geschaltet. Damit wird für steigende Frequenzen die Regelsteilheit zunehmend abgesenkt. Dieses stabile Regelverhalten überträgt sich somit auch auf die Gleichpegeleinstellung der Anpaßstufe o oder falls mehrere Anpaßstufen angeschaltet sind ebenfalls auf diese.

Bei den sonst üblicherweise verwendeten getasteten Regelungen, wird mittels einer Abtasthalteschaltung nur während einer kurzen Zeit der gesendete Bezugspegel als Gleichbezugspegel festgehalten und mittels einer Regelschaltung auf einen Referenzwert geregelt. Dies erschwert das Regelverhalten, denn einmal steht der Bezugspegel nur kurze Zeit zur Verfügung und zum anderen kann dieser Bezugspegel durch Störsignale gestört sein, denen die Regelschaltung dann folgt.

Ein zweiter Ausgang der Referenzspannungsquelle rq erzeugt das zur Referenzspannung rv proportionale Referenzpotential vp, das dem Spannungsreferenzeingang des Analog-Digital-Wandlers aw und entsprechenden weiteren Analog-Digital-Wandlern zugeführt ist.

Die Gleichpegeleinstellschaltung ist zwar auch in diskreter Form ausführbar, doch sind gerade durch die monolithische Integration die Voraussetzungen für die Gleichheit der Anpaßstufe o und der Nachbildung n besonders gut gewährleistet, weil z.B. Fertigungstoleranzen oder der Einfluß der Umgebungstemperatur durch die monolithische Integration sich in gleicher Weise auf die Teilschaltungen auswirken.

**Patentansprüche**

1. Adapterschaltung zur Anpassung der Fernsehkomponentensignale einer genormten SCART-Buchse (sb) (= Euro-Norm-Anschlußbuchsen-Steckverbindung) an die vorhandenen Bausteine eines digitale Fernsehsignale verarbeitenden Geräts, wobei Kontakte der SCART-Buchse an folgende Teilschaltungen angeschlossen sind:

- eine erste bzw. zweite bzw. dritte Eingangsschaltung (i1, i2, i3) für ein zugeführtes R- bzw. G- bzw. B-Signal (r, g, b) (R = Rot, G = Grün, B = Blau) und
- eine vierte bzw. fünfte Eingangsschaltung (i4, i5) für ein internes bzw. externes Videosignal (vi, ve), die mittels eines der SCART-Buchse (sb) zugeführten Videoumschaltsignals (vs) und eines Videoumschalters (vu) alternativ durchschaltbar sind,

gekennzeichnet durch folgende Merkmale:

- das mit der SCART-Buchse (sb) ausgerüstete Gerät verarbeitet digitale Fernsehsignale,
- die Ausgänge der ersten, der zweiten und der dritten Eingangsschaltung (i1, i2, i3) sind mit den Eingängen einer Matrix (m) zur Erzeugung eines Helligkeits-Signals (= Y-Signal) (y) und eines ersten und eines zweiten Farbart-Differenz-Signals (d1, d2) verbunden,
- das Y-Signal (y) bzw. das erste bzw. das zweite Farbart-Differenz-Signal (d1, d2) ist einem ersten bzw. einem zweiten bzw. einem dritten Ausgangsanschluß (a1, a2, a3) einer Eingangs-Ausgangs-Schnittstelle (ea) zugeführt,
- ein erster bzw. ein zweiter bzw. ein dritter Eingangsanschluß (e1, e2, e3) der Eingangs-Ausgangs-Schnittstelle (ea) ist wahlweise entweder mit dem Y-Signal (y) oder mit einem gefilterten Y-Signal (y') oder mit einem weiteren Y-Signal (yf) bzw. mit dem ersten oder mit einem ersten gefilterten oder mit einem weiteren ersten Farbart-Differenz-Signal (d1, d1', f1) bzw. mit dem zweiten oder mit einem zweiten gefilterten oder mit einem weiteren zweiten Farbart-Differenz-Signal (d2, d2', f2) gespeist,
- das gefilterte Y-Signal (y') bzw. das erste bzw. das zweite gefilterte Farbart-Differenz-Signal (d1', d2') ist mittels eines externen ersten bzw. zweiten bzw. dritten Filters (h1, h2, h3) gebildet, das eingangsseitig an den ersten bzw. zweiten bzw. dritten Ausgangsanschluß (a1, a2, a3) angeschlossen ist,
- das weitere Y-Signal (yf) bzw. das weitere erste bzw. das weitere zweite Farbart-Differenz-Signal (f1, f2) ist der Eingangs-Ausgangs-Schnittstelle (ea) aus einer weiteren Videosignalquelle zugeführt,
- der erste bzw. der zweite bzw. der dritte Eingangsanschluß (e1, e2, e3) ist ausgangsseitig mit einer ersten bzw. einer zweiten bzw. einer dritten Schnittstellen-Eingangsschaltung (g1, g2, g3) verbunden,
- die Ausgangssignale der ersten Schnittstellen-Eingangsschaltung (g1) sind mittels einer bereits im Gerät vorhandenen Videosignal-Digitalisierungs-und-Verarbeitungs-Stufe (vv) digitalisiert und
- die Ausgangssignale der zweiten und dritten Schnittstellen-Eingangsschaltung (g2, g3) sind mittels eines Analog-Digital-Wandlers (aw) alternierend digitalisiert, wobei der Digitalisierungstakt durch einen zugeführten Systemtakt (sc) gesteuert ist.

2. Adapterschaltung nach Anspruch 1, gekennzeichnet durch folgende Merkmale:
- die erste, die zweite und die dritte Eingangsschaltung (i1, i2, i3) enthalten jeweils eine Klemmschaltung (k), die während eines Klemmintervalls eine Klemmspannung (kv) niederohmig an die jeweilige Eingangsklemme der Eingangsschaltungen (i1, i2, i3) und damit an den adapterschaltungsseitigen Belag eines Koppelkondensators (c) legt, der in Signalflußrichtung vor der jeweiligen Eingangsklemme liegt.

3. Adapterschaltung nach Anspruch 1, gekennzeichnet durch folgende Merkmale:
- die erste, die zweite und die dritte oder die zweite und die dritte Schnittstellen-Eingangsschaltung (g1, g2, g3; g2, g3) enthalten jeweils eine Klemmschaltung (k) die während eines Klemmintervalls jeweils eine Schnittstellen-Klemmspannung (kg) niederohmig an den jeweiligen Eingangsanschluß (e1, e2, e3) legt.

4. Adapterschaltung nach Anspruch 1, gekennzeichnet durch folgende Merkmale:
- das Ausgangssignal der zweiten bzw. der dritten Schnittstellen-Eingangsschaltung (g2, g3) ist jeweils einem Eingang eines elektronischen Chroma-Umschalters (cu) zugeführt, dessen Ausgang mit dem Eingang eines einzigen Chroma-Wandlers (cw) verbunden ist,
- der Chroma-Umschalter (cu) ist von einem Chroma-Schaltsignal (cs) gesteuert und

- das Ausgangssignal des Chroma-Wandlers (cw) ist einem Multiplexer (mu) zugeführt, der von einem Schaltsignalerzeuger (ce) gesteuert die parallelen Ausgangsdaten des Chroma-Wandlers (cw) mindestens teilweise in serielle Daten als Chroma-Signal (cr) für einen im Gerät vorhandenen und an sich bekannten Chroma-Bus (cb) umwandelt.

5. Adapterschaltung nach Anspruch 1, gekennzeichnet durch folgende Merkmale:
   - das Ausgangssignal der ersten Schnittstellen-Eingangsschaltung (g1) ist dem ersten Eingang eines elektronischen Luma-Umschalters (lu) zugeführt, dessen Umschaltung von einem Luma-Umschaltsignal (ls) gesteuert ist und dessen Ausgang mit dem Eingang eines elektronischen Auswahl-Schalters (au) verbunden ist,
   - der zweite Eingang des elektrischen Luma-Umschalters (lu) liegt am Ausgang eines durch das Video-Umschaltsignal (vs) gesteuerten elektronischen Video-Umschalters (vu),
   - der Ausgang des Auswahl-Schalters (au) ist direkt oder über eine Treiberstufe (t) an einen Ausgangsanschluß (z) der Adapterschaltung (ap) angeschlossen, die an dem Ausgangsanschluß (z) als Ausgangssignal ein Ausgangs-Videosignal (v) abgibt,
   - dieses ist dem Eingang einer im Gerät vorhandenen Videosignal-Digitalisierungs- und -Verarbeitungs-Stufe (vv) zugeführt, die das Ausgangs-Videosignal (v) digitalisiert.

6. Adapterschaltung nach Anspruch 1, dadurch gekennzeichnet, daß die Ausgangssignale der Schnittstellen-Eingangsschaltungen (g1, g2, g3) jeweils in ihrer Amplitude mittels jeweils in den Signalflußweg eingefügter digital steuerbarer Amplitudensteller eingestellt sind, wobei die Amplitudensteller (k1, k2) in ihrem eingestellten Wert jeweils parallel gleichartig gesteuert sind.

7. Adapterschaltung nach Anspruch 1, dadurch gekennzeichnet, daß der Adapterschaltung (ap) Zeilen- und Bildsynchronsignale zusammen mit dem externen Videosignal (ve) oder alleine über dessen Anschluß zugeführt sind und mittels einer Abtrenn- und Kombinationsschaltung (sa) dem Ausgangssignal der ersten Schnittstellen-Eingangsschaltung (g1) hinzugefügt sind.

8. Adapterschaltungen nach Anspruch 1, gekennzeichnet durch folgende Merkmale:
   - mindestens zwei dieser Adapterschaltungen (ap) sind in einem Gerät angeschlossen,
   - die Adapterschaltungen (ap) enthalten jeweils einen Datenbus (b) mit einer Bussteuerung (bs), der Daten (d) von einer äußeren Datenquelle zugeführt sind,
   - mittels zugeführter unterschiedlicher Adressenmodifikationssignale (aa) sind die jeweiligen Datenbusadressen der Adapterschaltungen (ap) zur Unterscheidung geändert, und
   - mittels eines zugeführten Sperrsignals (h) sind die Ausgänge der zu sperrenden Adapterschaltungen (ap) bis auf die drei Schnittstellen-Ausgänge (a1, a2, a3) hochohmig geschaltet.

9. Adapterschaltung nach einem der Ansprüche 1 bis 8, gekennzeichnet durch folgende Merkmale:
   - dem Analog-Digital-Wandler (aw) ist eine Anpaßstufe (o) zur Gleichpegeleinstellung vorgeschaltet, die aus einem Eingangssignal (si) ein zu digitalisierendes Signal (ss) mit einem an den Analog-Digital-Wandler (aw) angepaßten Gleichbezugspegel bildet und die von einem Spannungsregelkreis (r) gesteuert ist,
   - das Eingangssignal (si) weist ein ersten Gleichbezugspegel (n1) oder einen Differenz-Bezugspegel (dp) auf,
   - der Anpaßstufe (o) ist ein Regelsignal (vr) zur Pegeleinstellung des zu digitalisierenden Signals (ss) auf einen zweiten Gleichbezugspegel (n2) zugeführt,
   - der Spannungsregelkreis (r) enthält einen Spannungsregler, einen Spannungsvergleicher (vc) und eine Referenzspannungsquelle (rq) mit einer Referenzspannung (rv), die dem minuendseitigen Eingang des Spannungsvergleichers (vc) zugeführt ist, wobei der Spannungsvergleicher (vc) das Regelsignal (vr) erzeugt,
   - der Spannungsregler ist eine Nachbildung (n) der Anpaßstufe (o) und liegt mit seinem entsprechenden Signaleingang an einer Mittelpegel-Gleichspannung (g1), die ungefähr dem mittleren Gleichpegel des Eingangssignals (si) gleich ist,
   - der Ausgang der Nachbildung (n) ist mit dem subtrahendseitigen Eingang des Spannungsvergleichers (vc) verbunden, und

- das Regelsignal (vr) ist zugleich dem Steuereingang der Nachbildung (n) und dem Steuereingang der Anpaßstufe (o) zugeführt.

10. Adapterschaltung nach Anspruch 9, gekennzeichnet durch folgende Merkmale:
    - der Signaleingang der Anpaßstufe (o) ist ein Differenz-Signaleingang,
    - der Signaleingang der Nachbildung (n) ist gleichfalls ein Differenz-Signaleingang,
    - der Differenz-Bezugspegel (dp) entspricht dem Differenz-Eingangssignal (si) von 0 Volt, und
    - der Differenz-Signaleingang der Nachbildung (n) liegt kurzgeschlossen an der Mittelpegel-Gleichspannung (gl).

## Claims

1. An adapter circuit for adapting the television component signals of a standard SCART socket (sb) (= Eurostandard socket) to the existing modules of a digital-television-signal-processing apparatus, with contacts of the SCART socket connected to the following subcircuits:
   - a first input circuit (i1) for an applied R signal (r), a second input circuit (i2) for an applied G signal (g), and a third input circuit (i3) for an applied B signal (b) (R = red, G = green, B = blue), and
   - a fourth and a fifth input circuit (i4, i5) for an internal video signal (vi) and an external video signal (ve), respectively, which can be switched through alternatively by means of a video-switching signal (vs) applied to the SCART socket (sb) and by means of a video switch (vu),

   characterized by the following features:
   - The apparatus equipped with the SCART socket processes digital television signals;
   - the outputs of the first, second, and third input circuits (i1, i2, i3) are connected to the inputs of a matrix (m) for generating a luminance signal (= y signal) (y), a first color-difference signal (d1), and a second color-difference signal (d2);
   - the Y signal (y), the first color-difference signal (d1), and the second color-difference signal (d2) are coupled to a first output terminal (a1), a second output terminal (a2), and a third output terminal (a3), respectively, of an input /output interface (ea);
   - a first input terminal (e1) of the input/output interface (ea) is fed either with the Y signal (y) or with a filtered Y signal (y') or with an additional Y signal (yf), a second input terminal (e2) is fed with the first color-difference signal (d1) or with a first filtered color-difference signal (d1') or with an additional first color-difference signal (f1), and a third input terminal (e3) is fed with the second color-difference signal (d2) or with a second filtered color-difference signal (d2') or with an additional second color-difference signal (f2);
   - the filtered Y signal (y') and the first and second filtered color-difference signals (d1', d2') are formed by means of external first, second, and third filters (h1, h2, h3), respectively, whose inputs are connected to the first, second, and third output terminals (a1, a2, a3), respectively;
   - the additional Y signal (yf) and the additional first and additional second color-difference signals (f1, f2) are fed to the input/output interface (ea) from an additional video-signal source;
   - the first, second, and third input terminals (e1, e2, e3) are connected at the output end to a first interface input circuit (g1), a second interface input circuit (g2), and a third interface input circuit (g3), respectively,
   - the output signals of the first interface input circuit (g1) are digitized by means of a video-signal-digitizing and -processing stage (vv) already contained in the apparatus, and
   - the output signals of the second and third interface input circuits (g2, g3) are digitized alternately by means of an analog-to-digital converter (aw), the digitization rate being controlled by an applied system clock (sc).

2. An adapter circuit as claimed in claim 1, characterized by the following features:
   - Each of the first, second, and third input circuits (i1, i2, i3) includes a low-impedance clamping circuit (k) which applies a clamping voltage (kv) to the input terminal of the respective input circuit (i1, i2, i3), and thus to the adapter-side plate of a coupling capacitor (c) preceding the input terminal in the direction of signal flow, during a clamping interval.

3. An adapter circuit as claimed in claim 1, characterized by the following features:
   - Each of the first, second, and third interface input circuits (g1, g2, g3) or each of the second and third interface input circuits (g2, g3) includes a low-impedance clamping circuit (k) which applies an interface clamping voltage (kg) to the respective input terminal (e1, e2, e3) during a clamping interval.

4. An adapter circuit as claimed in claim 1, characterized by the following features:
- The outputs of the second and third interface input circuits (g2, g3) are applied to associated inputs of an electronic chroma switch (cu) having its output connected to the input of a single chroma converter (cw);
- the chroma switch (cu) is controlled by a chroma-switching signal (cs), and
- the output of the chroma converter (cw) is fed to a multiplexer (mu) which converts the parallel output data from the chroma converter (cw), at least in part, into serial data under control of a switching-signal generator (ce), the serial data being delivered as a chroma signal (cr) to a chroma bus (cb) which is present in the apparatus and is known per se.

5. An adapter circuit as claimed in claim 1, characterized by the following features:
- The output of the first interface input circuit (g1) is applied to the first input of an electronic luma switch (lu) which is controlled by a luma-switching signal (ls) and has its output connected to the input of an electronic selector switch (au);
- the second input of the electronic luma switch (lu) is connected to the output of an electronic video switch (vu) controlled by the video-switching signal (vs);
- the output of the selector switch (au) is connected directly or via a driver stage (t) to an output terminal (z) of the adapter circuit (ap), which provides a video output signal (v) at said output terminal (z), and
- the video output signal (v) is fed to the input of a video-signal-digitizing and -processing stage (vv) which is contained in the apparatus and digitizes the video output signal (v).

6. An adapter circuit as claimed in claim 1, characterized in that the output signals of the interface input circuits (g1, g2, g3) are adjusted in amplitude by means of a digitally controllable amplitude-adjusting devide (k1, k2) inserted in the respective signal path, the amplitude-adjusting devices (k1, k2) being controlled in parallel in the same manner.

7. An adapter circuit as claimed in claim 1, characterized in that horizontal and vertical synchronizing signals, alone or together with the external video signal (ve), are applied to the adapter circuit (ap) via a video-signal terminal, and are added to the output signal of the first interface input circuit (g1) by means of a separating and combining circuit (sa).

8. Adapter circuits as claimed in claim 1, characterized by the following features:
- At least two of these adapter circuits (ap) are used in one apparatus;
- each of the adapter circuits (ap) contains a data bus (b) with a bus controller (bs) to which data (d) is supplied from an external data source;
- by means of applied different address modification signals (aa), the respective data bus addresses of the adapter circuits (ap) are altered to distinguish them from one another, and
- by means of an applied inhibiting signal (h), all outputs of the adapter circuits (ap) to be inhibited are switched to a high-impedance state except the three interface outputs (a1, a2, a3).

9. An adapter circuit as claimed in any one of claims 1 to 8, characterized by the following features:
- The analog-to-digital converter (aw) is preceded by a matching stage (o) for DC level adjustment which forms from an input signal (si) a signal (ss) to be digitized and having a DC reference level adapted to the analog-to-digital converter (aw), and which is controlled by a voltage-regulating circuit (r);
- the input signal (si) has a first DC reference level (n1) or a difference reference level (dp);
- the matching stage (o) is supplied with a control signal (vr) for adjusting the level of the signal (ss) to be digitized to a second DC reference level (n2);
- the voltage-regulating circuit (r) contains a voltage regulator, a voltage comparator (vc), and a reference-voltage source (rq) providing a reference voltage (rv) which is applied to the minuend input of the voltage comparator (vc), which provides the control signal (vr);
- the voltage regulator is a replica (n) of the matching stage (o) and has its corresponding signal input connected to a mean-level DC voltage (gl) which is approximately equal to the mean DC level of the input signal (si);

- the output of the replica (n) is connected to the subtrahend input of the voltage comparator (vc), and

- the control signal (vr) is applied both to the control input of the replica (n) and to the control input of the matching stage (o).

10. An adapter circuit as claimed in claim 9, characterized by the following features:

- The signal input of the matching stage (o) is a difference-signal input;

- the signal input of the replica (n) is also a difference-signal input;

- the difference reference level (dp) corresponds to the differential input signal (si) of 0 volt, and

- the difference-signal input of the replica (n) is short-circuited to the mean-level DC voltage (gl).

## Revendications

1. Circuit adaptateur pour l'adaptation des signaux de composantes de télévision d'une prise SCART normalisée (sb) (= connecteur de prise de raccordement satisfaisant à la norme européenne) aux modules présents d'un appareil traitant des signaux de télévision numérique, des contacts de la prise SCART étant raccordés aux éléments de circuits suivants :

- des premier, second et troisième circuits d'entrée (i1, i2, i3) pour des signaux respectifs envoyés R, G ou B (r, g ou b) (R = rouge, G = vert, B = bleu), et

- des quatrième et cinquième circuits d'entrée (i4, i5 pour des signaux interne et externe respectifs (vi, ve), qui peuvent être alternativement transmis au moyen d'un signal de commutation vidéo (vs), envoyé au moyen de la prise SCART (vs), et d'un commutateur vidéo (vu), caractérisé par les caractéristiques suivantes :

- l'appareil équipé de la prise SCART (sb) traite des signaux de télévision numériques,

- les sorties des premier, second et troisième circuits d'entrée (i1, i2, i3) sont raccordées aux entrées d'une matrice (m) servant à produire un signal de luminosité (= signal y) (y) et les premier et second signaux de différence chromatique (d1, d2),

- le signal Y (y) et les premier et second signaux de différence chromatique (d1, d2) sont envoyés respectivement à des première, seconde et troisième bornes de sortie (a1, a2, a3) d'une interface d'entrée-sortie (ea),

- des première, seconde et troisième bornes d'entrée (e1, e2, e3) de l'interface d'entrée-sortie (ea) sont alimentées au choix respectivement par le signal Y (y) ou un signal Y filtré (y') ou par un autre signal Y (yf) respectivement par le premier signal de différence chromatique (d1), ou par un premier signal de différence chromatique filtré (d1') ou par un autre premier signal de différence chromatique (f1) et par le second signal de différence chromatique (d2) ou un second signal de différence chromatique filtré (d2') ou un autre second signal de différence chromatique (f2),

- le signal Y filtré (y') et les premier et second signaux de différence chromatique filtrés (d1', d2') sont formés respectivement au moyen de premier, second et troisième filtres externes (h1, h2, h3), qui sont raccordés, côté entrée, respectivement aux première, seconde et troisième bornes de sortie (a1, a2, a3),

- l'autre signal Y (y) et les autres premier et second signaux de différence chromatique (f1, f2) sont envoyés à l'interface d'entrée/sortie (ea) à partir d'une autre source de signaux vidéo,

- les première, seconde et troisième bornes d'entrée (e1, e2, e3) sont raccordées côté sortie, respectivement à des premier, second et troisième circuits d'entrée d'interface (g1, g2, g3),

- les signaux de sortie du premier circuit d'entrée d'interface (g1) sont numérisés au moyen d'un étage (vv) de numérisation et de traitement de signaux vidéo, déjà présents dans l'appareil, et

- les signaux de sortie des second et troisième circuits d'entrée d'interface (g2, g3) sont numérisés alternativement au moyen d'un convertisseur analogique/numérique (aw), la cadence de numérisation étant commandée par une cadence m envoyée (sc).

2. Circuit adaptateur selon la revendication 1, caractérisé par les caractéristiques suivantes :

- les premier, second et troisième circuits d'entrée (i1, i2, i3) contiennent respectivement un circuit de verrouillage (k), qui, pendant un intervalle de verrouillage, applique, selon une liaison de faible valeur ohmique, une tension de verrouillage (kv) à la borne d'entrée respective des circuits d'entrée (i1, i2, i3) et, par conséquent, à l'armature, située du côté du circuit adaptateur, d'un condensateur de couplage (c), qui est situé en amont de la borne d'entrée respective, dans le sens de transmission du signal.

3. Circuit adaptateur suivant la revendication 1, caractérisé par les caractéristiques suivantes :
   - les premier, second et troisième ou les second et troisième circuits d'entrée d'interface (g1, g2, g3 ; g2, g3) contiennent respectivement un circuit de verrouillage (k) qui, pendant l'intervalle de verrouillage, applique, selon une liaison de faible valeur ohmique, respectivement une tension de verrouillage d'interface (kg) à la borne respective d'entrée (e1, e2, e3).

4. Circuit adaptateur selon la revendication 1, caractérisé par les caractéristiques suivantes :
   - le signal de sortie des second et troisième circuits d'entrée d'interface (g2, g3) est envoyé respectivement à une entrée d'un commutateur électronique de chrominance (ci), dont la sortie est raccordée à l'entrée d'un seul convertisseur de chrominance (cw),
   - le commutateur de chrominance (cu) est commandé par un signal de commutation de chrominance (cs), et
   - le signal de sortie du convertisseur de chrominance (cw) est envoyé à un multiplexeur (mu), qui convertit, d'une manière commandée par un générateur de signaux de commutation (ce), les données de sortie parallèles du convertisseur de chrominance (cw), au moins en partie en des données série sous la forme d'un signal de chrominance (cr) pour un bus (cb) de transmission du signal de chrominance, présent dans l'appareil et connu en soi.

5. Circuit adaptateur suivant la revendication 1, caractérisé par les caractéristiques suivantes :
   - le signal de sortie du premier circuit d'entrée d'interface (g1) est raccordé à la première entrée d'un commutateur électronique de luminance (lu), dont la commutation est commandée par un signal de commutation de luminance (ls) et dont la sortie est raccordée à l'entrée d'un commutateur électronique de sélection (au),

   - la seconde entrée du commutateur électronique de luminance (lu) est raccordée à la sortie d'un commutateur vidéo électronique (vu) commandé par le signal de commutation vidéo (vs),
   - la sortie du commutateur de sélection (au) est reliée directement ou par l'intermédiaire d'un étage d'attaque (t) à une borne de sortie (z) du circuit adaptateur (ap), qui délivre, sur la borne de sortie (z), en tant que signal de sortie, un signal vidéo de sortie (v),
   - ce signal est envoyé à l'entrée d'un étage (vv) de numérisation et de traitement des signaux vidéo, présent dans l'appareil et qui numérise le signal vidéo de sortie (v).

6. Circuit adaptateur suivant la revendication 1, caractérisé en ce que les amplitudes respectives des signaux de sortie des circuits d'entrée d'interface (g1, g2, g3) sont réglées au moyen de régulateurs respectifs d'amplitude insérés dans le trajet de transmission des signaux et pouvant être commandés numériquement, la valeur réglée dans les régulateurs d'amplitude (k1, k2) étant commandée respectivement en parallèle de la même manière.

7. Circuit adaptateur suivant la revendication 1, caractérisé en ce que des signaux de synchronisation de lignes et des signaux de synchronisation d'image sont envoyés au circuit adaptateur (ap) conjointement avec le signal vidéo externe (ve) ou bien seuls par l'intermédiaire de la borne de ce circuit et sont ajoutés, au moyen d'un circuit de séparation et de combinaison (sa), au signal de sortie du premier circuit d'entrée d'interface (g1).

8. Circuit adaptateur suivant la revendication 1, caractérisé par les caractéristiques suivantes :
   - au moins deux de ces circuits adaptateurs (ap) sont raccordés à un appareil,
   - les circuits adaptateurs (ap) contiennent chacun un bus de transmission de données (b) comportant une unité de commande de bus (bs), à laquelle des données (d) sont envoyées par une source extérieure de données,
   - les adresses respectives des bus de données des circuits adaptateurs (ap) sont modifiées, à des fins de différentiation, au moyen de signaux différents de modification d'adresses (aa) envoyés, et
   - les sorties des circuits adaptateurs (ap) devant être bloqués sont reliées au moyen d'un signal de blocage (h) envoyé, par une liaison de valeur ohmique élevée, aux trois sorties d'interface (a1, a2, a3).

9. Circuit adaptateur suivant l'une des revendications 1 à 8, caractérisé par les caractéristiques suivantes :

- en amont du convertisseur analogique/numérique (aw) est branché un étage d'adaptation (o) servant à régler le niveau de la composante continue et qui, à partir d'un signal d'entrée (sa), forme un signal (ss) devant être numérisé et possédant un niveau de référence de composante continue adapté au convertisseur analogique/numérique (aw) et commandé par un circuit de régulation de tension (r),
- le signal d'entrée (si) possède un premier niveau de référence de composante continue (n1) ou un niveau de référence de différence (dp),
- un signal de régulation (vr) est envoyé à l'étage d'adaptation (o) pour régler le niveau du signal (ss) à numériser, à une seconde valeur de référence de la composante continue (n2),
- le circuit de régulation de tension (r) contient un régulateur de tension, un comparateur de tension (vc) et une source de tension de référence (rq) délivrant une tension de référence (rv), qui est envoyée à l'entrée du minuende du comparateur de tension (vc), le comparateur de tension (vc) produisant le signal de régulation (vr),
- le régulateur de tension est un circuit d'équilibrage de l'étage d'adaptation (o) et son entrée correspondante des signaux est placée à une tension continue à niveau moyen (g1), qui est approximativement égale au niveau moyen de composantes continues du signal d'entrée (si),
- la sortie du circuit d'équilibrage (n) est raccordée à l'entrée, prévue pour le nombre à soustraite, du comparateur de tension (vc), et
- le signal de régulation (vr) est envoyé simultanément à l'entrée de commande du circuit d'équilibrage (n) et à l'entrée de commande de l'étage d'adaptation (o).

10. Circuit adaptateur suivant la revendication 9, caractérisé par les caractéristiques suivantes :

- l'entrée du signal de l'étage d'adaptation (o) est une entrée de signal de différence,
- l'entrée du signal du circuit d'équilibrage (n) est également une entrée de signal de différence,
- le niveau de référence de différence (dp) correspond au signal d'entrée de différence (si) égal à 0 volt, et
- l'entrée du signal de différence du circuit d'équilibrage (n) est placée en court-circuit à la tension continue à niveau moyen (g1).

FIG.1

EP 0 260 329 B1

# FIG.2

# FIG.3

FIG. 4

FIG. 5